# EUROPEAN PATENT SPECIFICATION

(11) **EP 0 504 522 B1**
(45) Date of publication and mention of the grant of the patent: **20.05.1998**
(21) Application number: 91309209.4
(22) Date of filing: 08.10.1991
(51) Int. Cl.: C08J 7/14, C08J 5/18, C09D 167/02

(54) **Biaxially oriented polyester film**
Biaxial orientierter Polyesterfilm
Film de polyester biaxialement orienté

(30) Priority: 11.02.1991 KR 227291
(43) Date of publication of application: 23.09.1992
(73) Proprietor: SAEHAN INDUSTRIES, INC., Kyungsan-city, Kyungsang buk-Do (KR)
(72) Inventor: Kim,Kwang Tae, Kangnam-ku Seoul (KR); Kim,Ik Sung, Suwon-city Kyungki-do (KR); Kim,Choon Young, Suwon-city Kyungki-do (KR)
(74) Representative: Lewin, John Harvey

(56) References cited:
- EP-A- 0 029 620
- EP-A- 0 188 620
- US-A- 4 476 189
- WORLD PATENTS INDEX LATEST Derwent Publications Ltd., London, GB; AN 82-91740E (43)

## Description

The present invention relates to a biaxially oriented polyester film having an improved friction coefficient and water resistance.

Polyester films, particularly biaxially oriented polyester films, are widely used as films for graphic art, base film for photography, base film for magnetic tape, film for insulation, film for wrapping materials, films for agriculture, etc. because of the excellent transparency, dimensional stability, mechanical properties, electrical properties, heat resistance and chemical resistance thereof.

However, in spite of the above good properties, polyester film has many defects during film-forming processes and other processing steps. For example, if the processing speed is increased in the printing process or coating process etc., many scratches are generated on the film surface owing to rubbing against the roll and if the processing conditions are poor, the run ability and wind ability become worse because of the increase of friction coefficient.

The prior methods for improving the friction coefficient of the polyester film include the particle addition method in which inert fine particles are added during polyesterification and the precipitate out method induced from the ester ion exchange catalyst residue during polyesterification. However, these methods are effective to decrease the friction coefficient, but generate voids in the film. This problem is a serious obstruction in microfilm and film for photography which are required to have excellent transparency.

In the meantime, the polyester films, which are coated with water-soluble or water-dispersed copolyester resins, have a bad water resistance and thereby have problems of moisture absorption by the coated layer, blocking caused by swelling and increase of turbidity during film-forming processes and other processing steps. The prior method for improving water resistance includes a method in which reactive compounds such as block polyisocyanates, vinyl compounds, methylolized or alkylolized urea compounds, melamine compounds, acrylamide compounds, epoxy compounds, etc. as cross-linking agents and inert fine particles are added. However, such cross-linking agents have defects in that the coating property is poor when the solution property is different from the resins and/or solvents which are used, and the transparency is worse after drying. If, in order to improve the coating property, a separate surface active agent is added, the transparency, friction coefficient, adhesion, water resistance etc. are impaired. Furthermore, if inert fine particles are added, the friction coefficient and water resistance are improved, but the transparency is worse.

Accordingly, it is an object of the present invention to provide a biaxially oriented polyester film having an improved coefficient of friction and water resistance by forming a coating layer in which a water-soluble resin composition is coated on one or both sides of the polyester film.

The present invention provides a biaxially oriented polyester film having at least one surface layer coated with a water-soluble resin composition comprising:
(A) a water-soluble copolyester resin having sulfonic acid salt groups and ester bonds obtained by polycondensation of dicarboxylic acid and diol in the polymer main chain, wherein the dicarboxylic acid includes aromatic dicarboxylic acid or ester-forming derivatives thereof, of which 2-20 mol% is constituted by 5-sodium sulfo isophthalic acid or a salt thereof;
(B) 0.1-20 wt%, based on the solid content of copolyester resin, of polyethylene wax or polypropylene wax having a molecular weight of 500 to 50,000;
(C) 0.01-15 wt%, based on the solid content of copolyester resin, of a polymer containing sulfonic acid and/or sulfonic acid salt groups, and having units of the following formula: 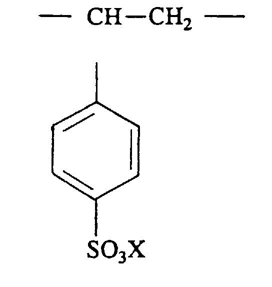 wherein X is H⁺, Li⁺, Na⁺, K⁺ or NH₄⁺; and
(D) 0.01-5 wt%, based on the solid content of copolyester resin, of inorganic fine particles having an average particle diameter of 5 to 5,000 nm.

The biaxially oriented polyester film according to the invention has an improved friction coefficient and water resistance as a result of the coating of the water-soluble resin composition on one or both sides of the polyester film.

For example, the dicarboxylic acid components of the polyester are terephthalic acid, isophthalic acid, adipic acid, 5-sodium sulfo isophthalic acid, trimellitic acid, trimellitic anhydride, phthalic anhydride, sebacic acid, etc. and the diol components are ethylene glycol, 1,4-butandiol, propylene glycol, neopentyl glycol, 1,6-hexanediol, diethylene glycol, triethylene glycol, polyethylene glycol, polypropylene glycol, etc. To obtain a water-soluble polymer, 5-sodium sulfo isophthalic acid or a salt thereof should be included in an amount of 2-20mol%, based on the aromatic dicarboxylic acid or ester-forming derivatives thereof. If the amount is less than 2mol%, the water-solubility or water-dispersion property of the polymer is not enough and if the amount is more than 20mol%, the water-resistance of the film surface is lowered after coating and the films easily adhere to each other due to moisture absorption. The added amounts of the aromatic dicarboxylic acid contained in the dicarboxylic acid components of the polyester resin are preferably 50-100mol% so as to raise the softening point of the polyester resins and increase the adherence property. Preferably, over 85mol% of the dicarboxylic acid is constituted by aromatic dicarboxylic acid, and the copolyester resin has a glass transition temperature of 45-75°C.

The waxy additive employed in the present invention is polyethylene wax or polypropylene wax and has a molecular weight of 500-50,000. The added amount of the wax is 0.1-20wt%, preferably 1-10wt%, based on the solid content of the copolyester resin. If the added amount is less than 0.1wt%, the friction coefficient is increased and if the amount is more than 20wt%, the friction coefficient is decreased but the water resistance is worse.

The styrene sulfonic acid compounds used in this invention are polymers containing sulfonic acid and/or sulfonic acid salt groups, and having units represented by the following formula:

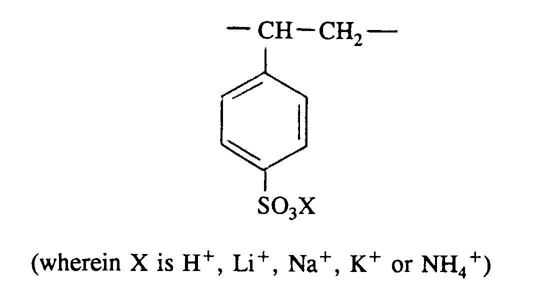

The styrene sulfonic acid compound is preferably a polymer having an average molecular weight of greater than 1,000, more preferably greater than 10,000. The added amount is 0.01-15wt%, preferably 0.1-10wt%, based on the solid content of the copolyester resin. When the amount is below 0.01wt%, the water resistance is not enough and when the amount is over 15wt%, the surface properties such as transparency and coating property are worse.

In the present invention, representative examples of the inorganic fine particles which are substantially inactive are titanium oxide, silicon oxide, calcium carbide, kaolin, calcium fluoride, alumina, barium sulfate, zirconium, mica, calcium phosphate, etc. and it is desirable to use particles in the inorganic colloidal state, especially spherical shape particles. The average particle diameter of the inorganic fine particles is 5-5,000nm. Preferably two types of particles having 5-110nm particle diameter (D-1) and 120-5,000nm particle diameter (D-2), preferably 30-90nm (D-1) and 140-500nm (D-2) respectively are used.

Further, the ratio (D-1):(D-2) of these particles is generally 0.1:1-1:5, preferably 0.4:1-1:2. If the average particle diameter and the added amount of the inorganic fine particles deviate from the above extents, the transparency, coefficient of friction, water resistance and so on are impaired.

According to the present invention, positive-ionic, negative-ionic or non-ionic surface active agents can be used and it is desirable to use non-ionic surface active agents to increase the coating property of the water-soluble or water-dispersed resin compounds.

Also, anti-foaming agents, thickeners, antioxidants, ultra-violet ray absorbents, pH control agents etc. can be added in the water-soluble or water-dispersed resin compounds.

The copolyester resins are prepared in water solution, by using water-soluble organic compounds or hot water. As the water-soluble organic compounds, an alcohol, ether, ketone, more particularly, methanol, ethanol, isopropanol, n-butanol, ethylene glycol, propylene glycol, methyl cellosolve, ethyl cellosolve, n-butyl cellosolve, methyl ethyl ketone etc. can be used.

It is desirable that the polyester films employed in the present invention have a surface roughness of less than 0.03µm, preferably less than 0.015µm, measured by centerline average roughness, and a turbidity of less than 10.0, preferably less than 2.0.

Films having a thickness of 30-200µm are suitable.

The water-soluble resin composition can be prepared by adding the waxy additive (B), styrene sulfonic acid compounds (C) and inorganic fine particles (D) to the copolyester resins (A) and the mixture ratio (B):(C):(D) is 0.1-20wt% : 0.01-15wt% : 0.01-5wt% by solid content based on the solid content of the copolyester resins.

The solid contents of the water-soluble resin composition in this invention is preferably below 20wt%, more preferably 1-8wt%, and the viscosity is preferably below 100 cps, more preferably below 20 cps.

The methods of coating can be conventional methods and the coating amount is preferably 0.001-2g/m², more preferably 0.008-0.5g/m² for the obtained film.

The biaxially oriented polyester film of the present invention can be widely used for basic materials, for microfilm, label, OHP, film for vaccum evaporation, film for lamination etc. because of the excellent surface properties and water resistance thereof.

The present invention will further be illustrated by the following examples, in which the properties of the films were measured as follows:
(1) Turbidity
   Turbidity was measured by Automatic NDH-20 of NIPPON DENSHOKU CO, LTD. and was recorded as (scattering light/total light) X 100.
(2) Friction Coefficient
   Coefficients of static friction and kinetic friction were measured by the Slippery-meter manufactured by Orient Tester Co., Ltd. according to the method of ASTM D-1894 under a load of 200g.
(3) Adhesion
   Pink lacquer as a resin for evaluation was coated on the film coated resin, and dried and then cracked in a lattice at intervals of 1mm and attached fully with cellophane adhesive tape (3M Inc. 610) so as not to flow in the air, and separated suddenly from the film coated resin. Then, the numbers of parts which are not separated in 100 of lattices at intervals of 1mm were counted and represented as a percentage.
(4) Water Resistance
   The biaxially oriented polyester film in which the resin is coated on both surfaces was digested for 30 minute in 50°C of water, naturally dried, and the turbidity was evaluated in comparison with film before treatment. The results of the evaluation were indicated as follows:
   below 0.4 of turbidity increase value : O (favourable)
   0.5-0.7 of turbidity increase value : ▲ (slightly bad)
   over 0.8 of turbidity increase value : X (bad)

### EXAMPLE 1

### (I) Preparation of a water-soluble polyester resin

The mixture of 49mol% of dimethylterephthalate, 43.5mol% of dimethylisophthalate and 7.5mol% of 5-sodiumsulfoisophthalic acid as dicarboxylic acid component, ethylene glycol and diethylene glycol were reacted, and a polyester having a glass transmission temperature of 64°C was obtained.

### (II) Preparation of a biaxially oriented polyester film

Two types of inorganic fine particles having 5-110nm (D-1) and 120-5,000nm (D-2) average particle diameter, respectively, were used.

A polyethylene terephthalate having an intrinsic viscosity of 0.66 cps in o-chlorophenol at 25°C was melted and extruded by an extruder, and cooled suddenly on the drum at 40°C to obtain an unstretched film having a thickness of 650µm. The unstretched film was then stretched at 95°C using a metallic roll in the moving direction of the film to 3.6 times its original length.

Separately, the resin compounds having 5wt% solids content was prepared by adding 5wt% of waxy additive, 4wt% of styrene sulfonic acid compound, 1.0wt% of above (D-1) and (D-2) respectively as inorganic fine particles and 1.0wt% of NS-208.5 manufacutred by Japan Oil and Fats Co., Ltd. as a non-ionic surface active agent to 5wt% of water-soluble copolyester resins prepared above (I).

This resin composition was coated on the above stretched film and the coated film was stretched to 3.6 times at a temperature of 105°C and heat treated at a temperature of 220°C. Thereby a 50µm thick biaxially oriented polyester film with a 0.05µm thick coating layer was obtained.

In the obtained film, the properties were measured and the results are shown in TABLE 1.

### COMPARATIVE EXAMPLE 1

Example 1 was repeated except that 10wt% of the waxy additive was used and styrene sulfonic acid compounds and inorgnaic fine particles were not added. A biaxially oriented polyester film was obtained.

The properties of the obtained film are shown in TABLE 1.

### COMPARATIVE EXAMPLE 2

Example 1 was repeated except that 5.3wt% of styrene sulfonic acid compound was used and the waxy additive and inorganic fine particles were not added. A biaxially oriented polyester film was obtained.

The properties of the obtained film are shown in TABLE 1.

### COMPARATIVE EXAMPLE 3

Example 1 was repeated except that 2wt% of styrene sulfonic acid compound was used and the waxy additive and inorganic fine particles were not added. A biaxially oriented polyester film was obtained.

The properties of the obtained film are shown in TABLE 1.

### COMPARATIVE EXAMPLE 4

Example 1 was repeated except that 20wt% of waxy additive was used and styrene sulfonic acid compound and inorganic fine particles were not added. A biaxially oriented polyester film was obtained.

The properties of the obtained film are shown in TABLE 1.

### COMPARATIVE EXAMPLE 5

Example 1 was repeated except that waxy additive, styrene sulfonic acid compound and inorganic fine particles were not used. A biaxially oriented polyester film was obtained.

The properties of the obtained film are shown in TABLE 1.

### COMPARATIVE EXAMPLE 6

Example 1 was repeated except that WR-901 manufactured by NIPPON GOSEI CO., LTD. was used instead of the water-soluble copolyester resin prepared above (I) and waxy additive, styrene sulfonic acid compound and inorganic fine particles were not added. A biaxially oriented polyester film was obtained.

The properties of the obtained film are shown in TABLE 1.

**TABLE 1**

| | TURBIDITY | COEFFICIENT | | ADHESION | WATER RESISTANCE |
|---|---|---|---|---|---|
| | | µS | µK | | |
| EXAMPLE 1 | 0.4 | 0.35 | 0.29 | 100/100 | ○ |
| COMPARATIVE EXAMPLE 1 | 0.4 | 0.36 | 0.30 | 100/100 | ▲ |
| COMPARATIVE EXAMPLE 2 | 0.4 | 0.43 | 0.38 | 100/100 | ▲ |
| COMPARATIVE EXAMPLE 3 | 0.4 | 0.47 | 0.39 | 100/100 | ▲ |
| COMPARATIVE EXAMPLE 4 | 0.4 | 0.30 | 0.26 | 100/100 | ▲ |
| COMPARATIVE EXAMPLE 5 | 0.4 | 0.50 | 0.42 | 100/100 | X |
| COMPARATIVE EXAMPLE 6 | 0.4 | 0.59 | 0.56 | 100/100 | X |

## Claims

1. A biaxially oriented polyester film having at least one surface layer coated with a water-soluble resin composition comprising:
(A) a water-soluble copolyester resin having sulfonic acid salt groups and ester bonds obtained by polycondensation of dicarboxylic acid and diol in the polymer main chain, wherein the dicarboxylic acid includes aromatic dicarboxylic acid or ester-forming derivatives thereof, of which 2-20 mol% is constituted by 5-sodium sulfo isophthalic acid or a salt thereof;
(B) 0.1-20 wt%, based on the solid content of copolyester resin, of polyethylene wax or polypropylene wax having a molecular weight of 500 to 50,000;
(C) 0.01-15 wt%, based on the solid content of copolyester resin, of a polymer containing sulfonic acid and/or sulfonic acid salt groups, and having units of the following formula: 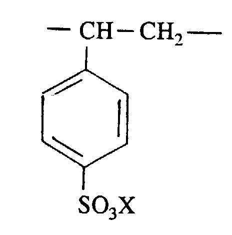 wherein X is H⁺, Li⁺, Na⁺, K⁺ or NH₄⁺; and
(D) 0.01-5 wt%, based on the solid content of copolyester resin, of inorganic fine particles having an average particle diameter of 5 to 5,000 nm.

2. A film according to claim 1, in which, in the copolyester resin (A), 50-100 mol% of the dicarboxylic acid is constituted by aromatic dicarboxylic acid.

3. A film according to claim 2, in which over 85 mol% of the dicarboxylic acid is constituted by aromatic dicarboxylic acid, and the copolyester resin has a glass transition temperature of 45-75°C.

4. A film according to any of claims 1 to 3, in which the inorganic fine particles (D) are inactive and of spherical shape, having average particle diameters of 5-110 nm (D-1) or 120-5,000 nm (D-2), the ratio of particles (D-1) to particles (D-2) being 0.1:1-1:5.

## Patentansprüche

1. Biaxial orientierter Polyesterfilm, bei dem wenigstens eine Oberflächenschicht überzogen ist mit einer wasserlöslichen Harzzusammensetzung, umfassend:
(A) ein wasserlösliches Copolyesterharz mit Sulfonsäuresalzgruppen und Esterbindungen, die durch Polykondensation von Dicarbonsäure und Diol in der Polymerhauptkette erhalten werden, wobei die Dicarbonsäure aromatische Dicarbonsäure oder esterbildende Derivate davon einschließt, wovon 2 - 20 mol-% gebildet werden durch 5-Natriumsulfoisophthalsäure oder Salze davon;
(B) 0,1 - 20 Gew.-%, basierend auf dem Festkörpergehalt des Copolyesterharzes, Polyethylenwachs oder Polypropylenwachs mit einem Molekulargewicht von 500 bis 50000;
(C) 0,01 - 15 Gew.-%, basierend auf dem Festkörpergehalt des Copolyesterharzes, eines Polymeren mit Sulfonsäuregruppen und/oder Sulfonsäuresalzgruppen und mit Einheiten der folgenden Formel: 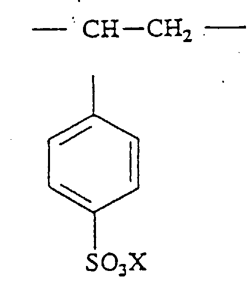 wobei X H⁺, Li⁺, Na⁺, K⁺ oder NH₄⁺ ist; und
(D) 0,01 - 5 Gew.-%, basierend auf dem Festkörpergehalt des Copolyesterharzes, anorganische, feine Teilchen mit einem durchschnittlichen Teilchendurchmesser von 5 bis 5000 nm.

2. Film nach Anspruch 1, wobei in dem Copolyesterharz (A) 50 - 100 mol-% der Dicarbonsäure durch aromatische Dicarbonsäure gebildet ist.

3. Film nach Anspruch 2, wobei über 85 mol-% der Dicarbonsäure durch aromatische Dicarbonsäure gebildet ist und das Copolyesterharz eine Glasübergangstemperatur von 45 - 75°C aufweist.

4. Film nach einem der Ansprüche 1 bis 3, wobei die anorganischen, feine Teilchen (D) inaktiv und von Kugelgestalt sind und durchschnittliche Teilchendurchmesser von 5 - 110 nm (D-1) oder 120-5000 nm (D-2) aufweisen, wobei das Verhältnis der Teilchen (D-1) zu den Teilchen (D-2) 0,1:1 - 1:5 ist.

## Revendications

1. Film polyester orienté biaxialement ayant au moins une couche superficielle recouverte d'une composition de résine hydrosoluble comprenant :
(A) une résine copolyester hydrosoluble ayant des groupes de sel d'acide sulfonique et des liaisons ester obtenue par polycondensation d'acide dicarboxylique et de diol dans la chaîne polymère principale, dans laquelle l'acide dicarboxylique comprend un acide dicarboxylique aromatique ou des dérivés formant des esters de celui-ci, dans laquelle 2 - 20% en mole est constitué par de l'acide 5-sodium sulfo-isophtalique ou un sel de celui-ci;
(B) 0,1 - 20% en poids, sur la base de la teneur en matières solides de la résine copolyester, de cire polyéthylène ou de cire polypropylène ayant une masse moléculaire de 500 à 50 000;
(C) 0,01 - 15% en poids, sur la base de la teneur en matières solides de la résine copolyester, d'un polymère contenant des groupes acide sulfonique et/ou de sel d'acide sulfonique, et ayant des motifs de la formule suivante : 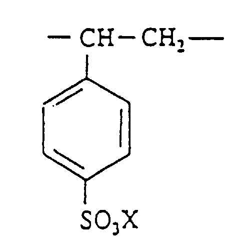 dans laquelle X est H⁺, Li⁺, Na⁺, K⁺ ou NH₄⁺; et
(D) 0,01 - 5%, sur la base de la teneur en matières solides de la résine copolyester, de fines particules inorganiques ayant un diamètre moyen de particule de 5 à 5000 nm.

2. Film selon la revendication 1, dans lequel, dans la résine copolyester (A), 50 - 100% en mole de l'acide dicarboxylique est constitué d'acide dicarboxylique aromatique.

3. Film selon la revendication 2, dans lequel plus de 85% en mole de l'acide dicarboxylique est constitué d'acide dicarboxylique aromatique, et la résine copolyester a une température de transition vitreuse de 45 - 75°C.

4. Film selon l'une quelconque des revendications 1 à 3, dans lequel les fines particules inorganiques (D) sont inactives et de forme sphérique, ayant des diamètres moyens de particules de 5 - 110 nm (D-1) ou 120 - 5 000 nm (D-2), le rapport de particules (D-1) aux particules (D-2) étant de 0,1:1 - 1:5.
